(19) Europäisches Patentamt
European Patent Office
Office européen des brevets

(11) **EP 2 168 802 B1**

(12) **EUROPEAN PATENT SPECIFICATION**

(45) Date of publication and mention of the grant of the patent:
**12.01.2011   Bulletin 2011/02**

(51) Int Cl.:
***B60K 6/26*** *(2007.10)*          ***B60K 6/445*** *(2007.10)*
*F16H 57/04* *(2010.01)*

(21) Application number: **08425628.8**

(22) Date of filing: **24.09.2008**

(54) **Hybrid traction system of thermal-electric type with concentric electric machines**

Wärmeelektrisches Hybridzugsystem mit konzentrischen elektrischen Maschinen

Système de traction hybride de type thermoélectrique avec machines électriques concentriques

(84) Designated Contracting States:
**DE FR IT**

(43) Date of publication of application:
**31.03.2010   Bulletin 2010/13**

(73) Proprietor: **Magneti Marelli S.p.A.**
**Corbetta (MI) (IT)**

(72) Inventors:
• **Cominetti, Paolo**
**40137 Bologna (IT)**
• **Raimondi, Marco**
**41010 Piumazzo (IT)**

(74) Representative: **Bergadano, Mirko et al**
**Studio Torta S.r.l.**
**Via Viotti, 9**
**10121 Torino (IT)**

(56) References cited:
**EP-A- 1 419 921          WO-A-2007/017719**
**DE-A1-102007 054 355    FR-A- 2 811 267**
**US-A- 6 114 784          US-A1- 2008 135 314**

**Description**

TECHNICAL FIELD

The present invention relates to a hybrid traction system of thermal-electric type, i.e. to a traction system in which the power used for the traction is provided by at least one thermal engine and by at least one electric machine.

BACKGROUND ART

Patent application WO2007017719A2 describes a hybrid traction system of the thermal-electric type comprising an internal combustion engine, an internal electric machine of the internal rotor type and an external electric machine of the external rotor type which is coaxially arranged about the internal electric machine. An input shaft is mechanically connected to a drive shaft of the thermal internal combustion engine, is rotationally mounted about a rotation axis, and is coaxially arranged inside the internal electric machine. In other words, the input shaft is coaxially mounted inside the internal electric machine and, in turn, the internal electric machine is coaxially mounted inside the external electric machine; in this manner, the two electric machines are coaxially arranged into each other, and the input shaft is coaxially arranged inside the two electric machines.

An epicyclic gear train is comprised, comprising a sun gear angularly integral with the rotor of the internal electric machine, a planet gear carrier angularly integral with the input shaft, a number of planet gears which mesh with the sun gear and are carried by the planet gear carrier, and an external ring gear which meshes with the planet gears and is angularly integral with the rotor of the external electric machine. A drive gear angularly integral with the external ring gear of the epicyclic gear train is arranged on the side opposite to the rotor of the external electric machine and transmits the motion to the drive wheels by means of a differential.

The hybrid traction system described in patent application WO2007017719A2 has some drawbacks because it is relatively complex to be assembled and does not allow an adequate dissipation of the heat generated by the stators of the electric machine.

DISCLOSURE OF INVENTION

It is the object of the present invention to provide a hybrid traction system of the thermal-electric type, which is free from the above-described drawbacks and which is easy and cost-effective to be implemented.

According to the present invention, a hybrid traction system of the thermal-electric type is implemented as set out in the appended claims.

BRIEF DESCRIPTION OF THE DRAWINGS

The present invention will now be described with reference to the accompanying drawings, which show some non-limitative embodiments thereof, in which:

- figure 1 is a diagrammatic, longitudinal section view, with parts removed for clarity, of a hybrid traction system of the thermal-electric type according to the prior art WO20070177192A2
- figure 2 is a diagrammatic, longitudinal section view, with parts removed for clarity, of a variant of a drive unit of the traction system in figure 1;
- figure 3 and 4 are perspective views of the drive unit of figure 2;
- figure 5 is a perspective view of a rotor of an internal electric machine of the drive unit in figure 2;
- figure 6 is a longitudinal section view of the rotor in figure 5;
- figure 7 is a perspective view of the stators of the electric machines of the drive unit in figure 2;
- figure 8 is a frontal view of the stators in figure 7;
- figure 9 is a longitudinal section view of the stators in figure 5;
- figure 10 is a perspective view of a rotor of an external electric machine of the drive unit in figure 2;
- figure 11 is an enlarged view of a detail in figure 2 with the cooling and lubrication oil paths highlighted; and
- figure 12 is a diagrammatic, perspective view of the cooling and lubrication oil paths inside the stators of the electric machines of the drive unit in figure 2.

PREFERRED EMBODIMENT OF THE INVENTION

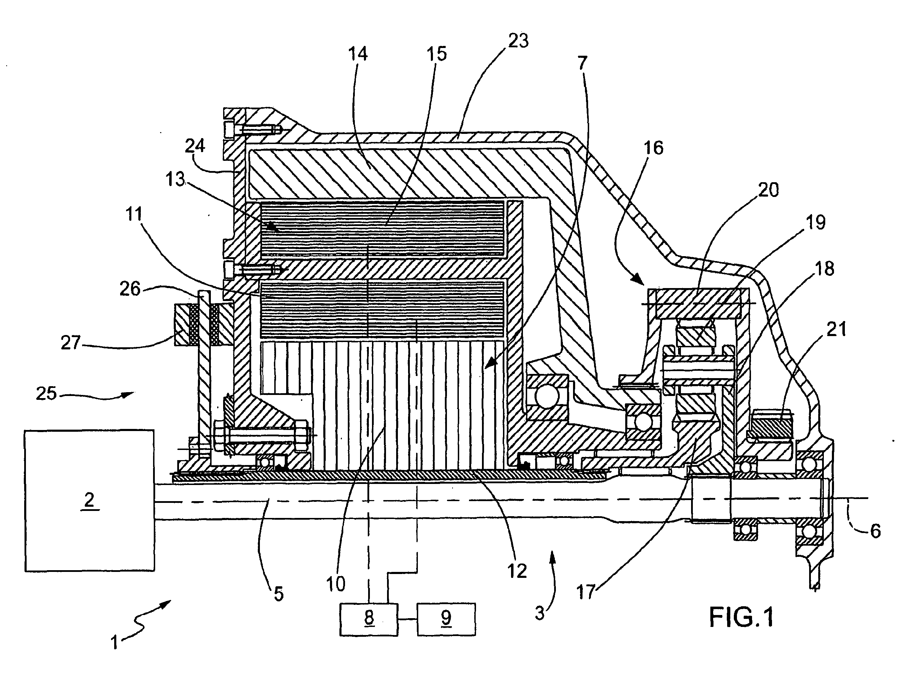

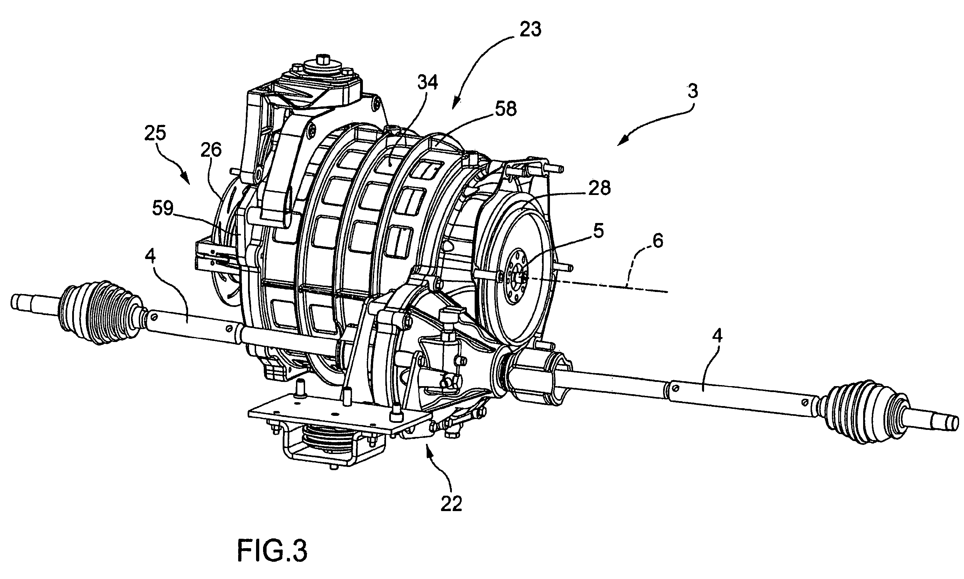

In figure 1, numeral 1 indicates as a whole a hybrid traction system of the thermal-electric type. The traction system 1 comprises a thermal internal combustion engine which transmits the motion to a drive unit 3, which in turn transmits the motion to the drive wheels (not shown) by means of a pair of axle shafts 4 (shown in figure 3).

The drive unit 3 comprises an input shaft 5, which is mechanically connected to the thermal internal combustion engine 2 and is rotationally mounted about a rotation axis 6.

The drive unit 3 comprises an internal electric machine 7, which is reversible (i.e. it may work both as electric motor by absorbing electrical energy and generating a mechanical driving torque, and as electric generator by absorbing mechanical energy and generating electrical energy) and is driven by an electric drive 8, connected to at least one battery 9 adapted to store electrical energy. The internal electric machine 7 is of the internal rotor type and is provided with a rotor 10, which is rotationally mounted about the rotation axis 6, and with a stator 11 which is electrically connected to the electric drive 8 and surrounds the exterior of the rotor 10. The internal electric machine 7 is coaxially arranged about the input shaft 5, and thus the rotor 10 of the internal electric machine 7 is keyed onto a hollow shaft 12, which idly accommodates the input shaft 5 therein (i.e. the hollow shaft 12 may freely rotate with respect to the input shaft 5).

The drive unit 3 comprises an external electric machine 13, which is reversible (i.e. may work both as electric motor by absorbing electrical energy and generating a mechanical driving torque, and as electric generator by absorbing mechanical energy and generating electrical energy) and is driven by the electric drive 8 connected to the battery 9. The external electric machine 13 is of the external rotor type and is provided with a rotor 14, which is rotationally mounted about the rotation axis 6 and is hollow inside, and with a stator 15 which is electrically connected to the electric drive 8, is arranged inside the rotor 14 and is hollow inside to accommodate the internal electric machine 7 therein.

In other words, the input shaft 5 is coaxially mounted inside the internal electric machine 7, and in turn the internal electric machine 7 is coaxially mounted inside the external electric machine 13; in this manner, the two electric machines 7 are coaxially arranged into each other and the input shaft 5 is coaxially arranged inside the two electric machines 7 and 13. In virtue of the fact that the internal electric machine 7 is of the internal rotor type and that the external electric machine 13 is of the external rotor type, the two stators 11 and 15 of the two electric machines 7 and 13 are arranged side by side and are radially surrounded by the two rotors 10 and 14.

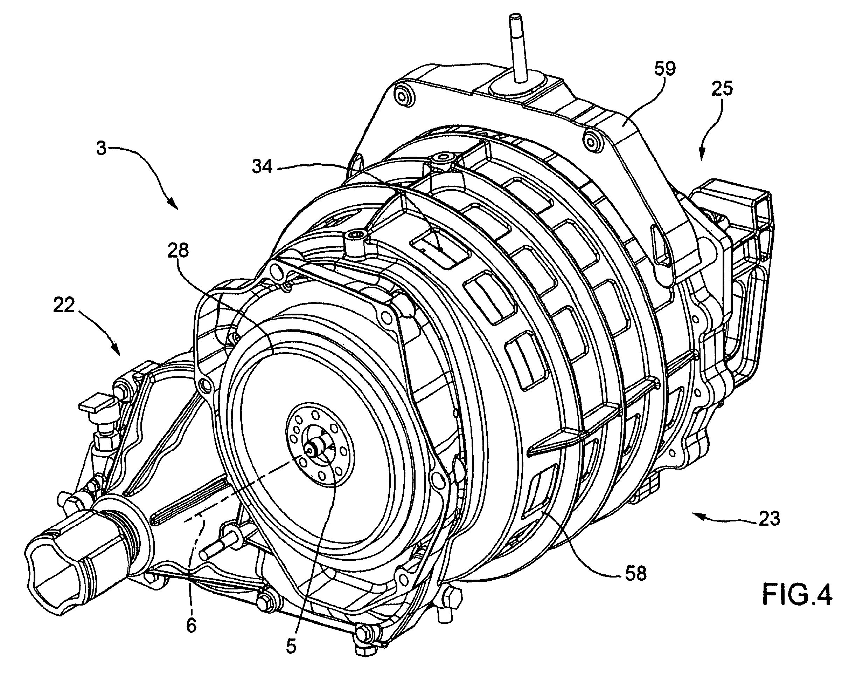

The drive unit 3 comprises an epicyclic gear train 16 provided with a sun gear 17 angularly integral with the shaft 12 of the rotor 10 of the internal electric machine 7 (i.e. with the rotor 10 of the internal electric machine 7), a planet gear carrier 18 angularly integral with the input shaft 5, a number of planet gears 19 which mesh with the sun gear 17 and which are carried by the planet gear carrier 18, and an external ring gear 20 which meshes with the planet gears 19 and is angularly integral with the rotor 14 of the external electric machine 13. A drive gear 21 is provided, being also angularly integral with the external ring gear 20 of the epicyclic gear train 16, being arranged on the side opposite to the rotor 14 of the external electric machine 13, and transmitting the motion towards the axle shafts 4 (shown in figure 3) integral with the drive wheels by means of a differential 22 (shown in figures 3 and 4).

The drive unit 3 comprises a cylinder-shaped carcass 23, which is fixed and accommodates the two electric machines 7 and 13, the epicyclic gear train 16 and the drive gear 21 therein. The carcass 23 supports a bracket 24 which is firmly connected to the carcass 23 itself and in turn supports the stators 11 and 15 of the two electric machines 7 and 13. Furthermore, the carcass 23 rotationally supports the input shaft 5 and the rotors 10 and 14 of the two electric machines 7 and 13 by means of the interposition of respective bearings.

The mechanical power generated by the thermal internal combustion engine 2 is divided into two fractions in the epicyclic gear train 16, which thus serves as a power distributor: a first fraction is transformed into electrical power by the internal electric machine 7, working as a generator, and is reconverted into mechanical power by the external electric machine 13; the second fraction is added to the mechanical power generated by the external electric machine 13 on the external ring gear 20 of the epicyclic gear train 16, and is then transmitted to the wheels the vehicle by means of the drive gear 21.

In the division and following power recombination process, the torque and speed factors of the original power from the thermal internal combustion engine 2 are altered, so as to create a gear ratio between the thermal internal combustion engine 2 and the drive wheels, which continuously varies within an extended range, even with negative values, i.e. with the possibility of reversing the rotation direction of the drive wheels (i.e. the travel direction of the vehicle).

The input shaft 5 connects the thermal internal combustion engine 2 to the body of the planet gear carrier 18 of the epicyclic gear train 16, to which it thus transmits its torque and angular speed. The sun gear 17 of the epicyclic gear train 16 is connected to the rotor 10 of the internal electric machine 7, while the external ring gear 20 is integral with both the rotor 14 of the external electric machine 13 and the drive gear 21 which actuates the final drive to the drive wheels.

The speed division between the three elements of the epicyclic gear train 16 is governed by the known Willis' law.

$$\Omega_s = \frac{z1 + z3}{z1}\Omega_m - \frac{z3}{z1}\Omega_c$$

$\Omega_s$ speed of the sun gear 17 and rotor 10 of the internal electrical machine 7;
$\Omega_m$ speed of the planet gear carrier 18;
$\Omega_c$ speed of the external ring gear 20, and also of the rotor 14 of the external electric machine 13 and drive gear 21;
z1 number of teeth of the sun gear 17;
z3 number of teeth of the external ring gear 20.

When the internal electric machine 7 generates electrical power, its rotor 10 transmits a stall torque Cs to the sun gear 17, and this stall torque Cs creates a torque Cr on the external ring gear 20 and also a torque Cm on the planet gear carrier 18 of the epicyclic gear train 16; these torques are reciprocally bound by the equations of equilibrium:

$$Cs/Cr=z1/z3$$

$$Cs+Cr+Cm=0$$

Cs     stall torque Cs to the sun gear 17;
Cr     torque Cr on the external ring gear 20;
Cm    torque Cm on the planet gear carrier 18;
z1     number of teeth of the sun gear 17;
z3     number of teeth of the external ring gear 20.

At the same time, the electrical power generated by the internal electric machine 7 working as a generator is used for feeding the external electric machine 13 working as a motor, the rotor 14 of which generates a torque C2 which is transmitted to the external ring gear 20. Therefore, a torque Cu which is the sum of the torque Cr and torque C2 will act on the external ring gear 20.

If the value of the torque Cu is sufficient to actuate the downstream drive, and specifically the drive wheels, the external ring gear 20 starts rotating in a direction agreeing with the speed of the planet gear carrier 18, and at the same time the speed of the sun gear 17 is reduced, if the speed of the planet gear carrier 18 remains constant: the three speeds of the sun gear 17, of the external ring gear 20 and of the planet gear carrier 18 are bound only by the known, previously mentioned Willis' law.

In order to increase the speed of the external ring gear 20, and thus of the drive wheels (if the speed of the planet gear carrier 18 remains unchanged), the speed of the sun gear 17 must be reduced, by a deceleration controlled by the electric drive 8 of the rotor 10 of the internal electric machine 7, and this also until the sun gear 17 stops, despite continuing to exchange torque with the internal electric machine 7, in virtue of the previously mentioned torque equilibrium relationship. Under these conditions, the internal electric machine 7 works under electrically blocked rotor conditions, thus dissipating electrical power.

If the internal electric machine 7 reverses its motion direction, i.e. starts working as a motor, despite keeping the torque sign constant, the epicyclic gear train 16 switches from the function of distributor to that of power adder: the power entering through the planet gear carrier 18 is added to the power entering through the sun gear 17, resulting in that the rotation speed of the external gear ring 20 will increase as the rotation speed of the rotor 10 of the internal electric machine 7 increases, again according to the known Willis' law, and even the power transmitted to the external ring gear 20 will be the sum of the power transmitted to the input shaft 5 by the thermal internal combustion engine 2 and of the mechanical power generated by the internal electric machine 7 working as a motor.

In this case, the mechanical power on the external ring gear 20 may be divided into a first mechanical power fraction directed to the drive wheels and a second mechanical power fraction needed to drive the external electric machine to operate it as a generator, which produces the electric power required to feed the internal electric machine 7.

The speed of the input shaft 5 has been assumed to be constant heretofore, while the speed of the drive gear 21 connected to the external ring gear 20 of the epicyclic gear train 16 switches from a zero value to a progressively increasing speed, until the sun gear 17 stops, and further increasing, when the motion direction of the internal electric machine 7 is reversed, by switching it from working as a generator to work as a motor, while the external electric machine 13 switches, in turn, from working as a motor to work as a generator.

The epicyclic gear train 16 thus achieves a drive with a continuous speed variation of the drive wheels, which may be obtained by adjusting the speed of the internal electric machine 7 and external electric machine 13. The speed of the drive wheels may be further varied by adjusting the speed and power generated by the thermal internal combustion engine 2, i.e. the speed of the input shaft 5 and the power transmitted to the planet gear carrier 18 by the epicyclic gear train 16.

The drive unit 3 comprises a braking device 25 (a hydraulically controlled disc brake in the disclosed embodiment), which has a rotating disc 26 integral with the shaft 12 of the rotor 10 of the internal electric machine 7 (i.e. with the rotor 10 of the internal electric machine 7) and a fixed caliper 27, which is supported by the carcass 23 outside the carcass 23 itself and is adapted to clamp on the disc 26. By actuating the braking device 25 it is possible to block the shaft 12 of the rotor 10 of the internal electric machine 7 thus preventing the rotation thereof.

When the travel conditions of the vehicle are such that they require a substantially constant speed, by using the braking device 25, it is possible to make all the mechanical power supplied to the input shaft 5 and transmitted to the epicyclic gear train 16 be transmitted to the drive wheels of the vehicle, thus excluding the electric machines 7 and 13.

This operating condition, with the rotor 10 of internal electric machine 7 and therefore the sun gear 16 blocked by the action of the braking device 25, is different from the condition in which the sun gear 16 is kept blocked by the rotor 10, not braked, of the internal electric machine 7. Indeed, in the latter case, there is however a dissipation of electrical power in the internal electric machine 7 which must work as a static electromagnetic brake (i.e. must generate a braking torque with the rotor 10 stopped), while, when the rotor 10 is blocked by the intervention of the braking device 25, there is no dissipation of electrical power in the internal electric machine 7, thus with the elimination of electric losses and the consequent increase of efficiency of the power drive to the drive wheels.

The braking device 25 is the control device of the epicyclic gear train 16 functionally switching from power distributor to ordinary gear train, with the cancellation of all the electric losses which characterize the electrical power chain, as well as the characteristic drawbacks of the situation of an electric machine at maximum torque, i.e. the internal electric machine 7, with the rotor being electrically blocked.

In practice, when the speed of the sun gear 16 approaches to zero, during the increase of the vehicle speed to the cruising speed value, the intervention of the braking device 25 is instructed, which braking device 25 develops a stall torque on the sun gear 16, in parallel to the braking torque developed by the internal electric machine 7 working as a generator, until the sun gear 16 stops: at this point, the braking device 25 must serves a function of holding the torque on the sun gear 16, torque which is proportional to that delivered by the thermal internal combustion engine 2, as well as to that created on the external ring gear 20 and directed to the drive wheels.

With this kinematic configuration, and by appropriately choosing the fixed gear ratios, the ground speed variations of the vehicle are obtained only by adjusting the speed of the thermal internal combustion engine 2, exactly as in vehicles provided with conventional drives, and in the range of a same gear ratio. The feature of modern engines of providing high increases of driving torque, up to 30%, from the maximum rpm of maximum power to the maximum rpm of maximum torque, allows the delivery of an almost constant power in a wide speed range of the drive shaft, and thus allows to obtain wide variations of the vehicle speed even with gear ratios being constant. Therefore, the operating configuration with the rotor 10 of the internal electric machine 7 being braked by the braking device 25, which allows to temporarily exclude the hybrid operating mode, does not impair the fine adjustment of the vehicle speed and allows to cancel the electric losses associated with keeping the electric blocking of the rotor 10.

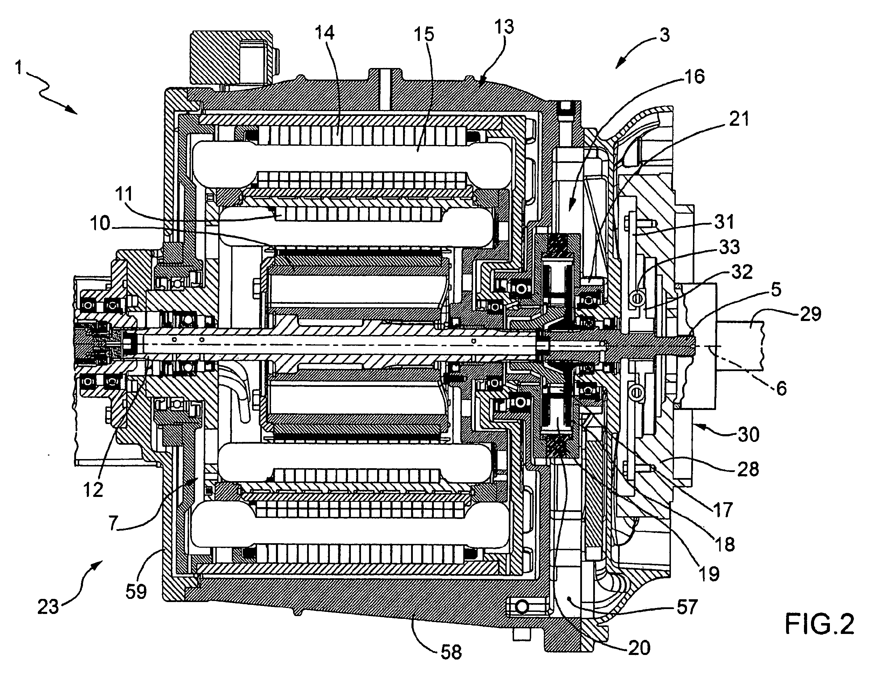

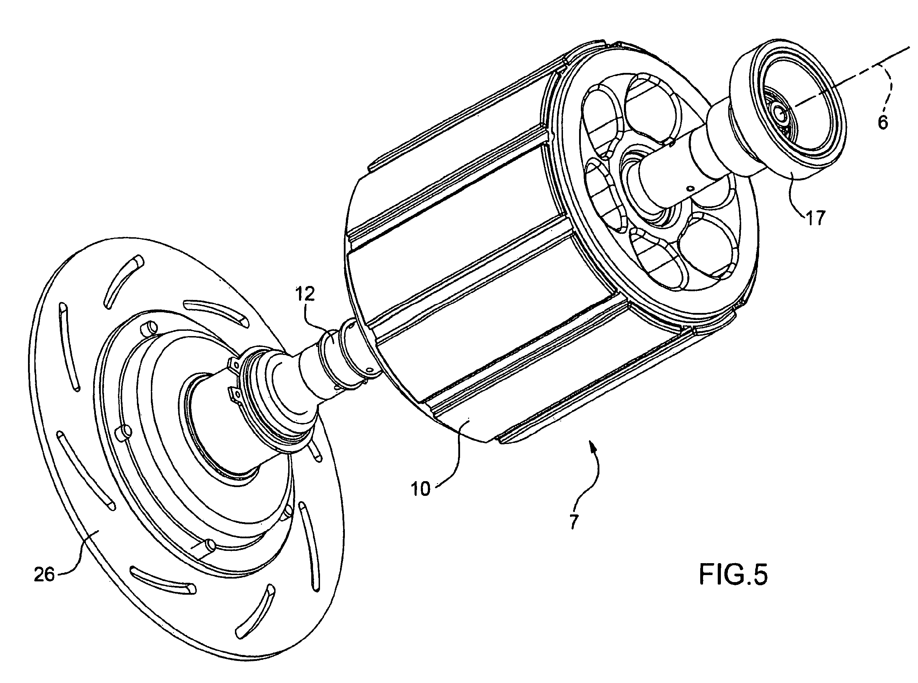

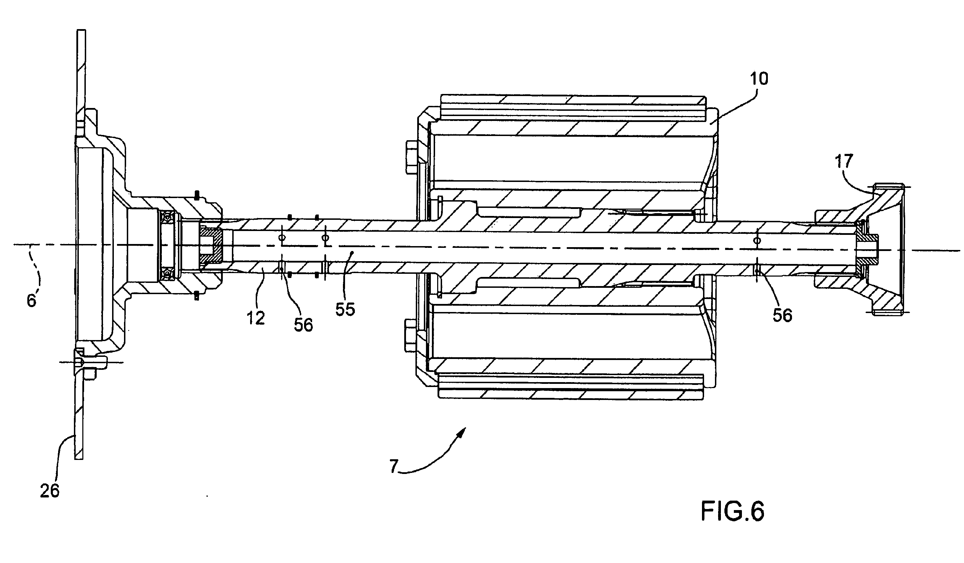

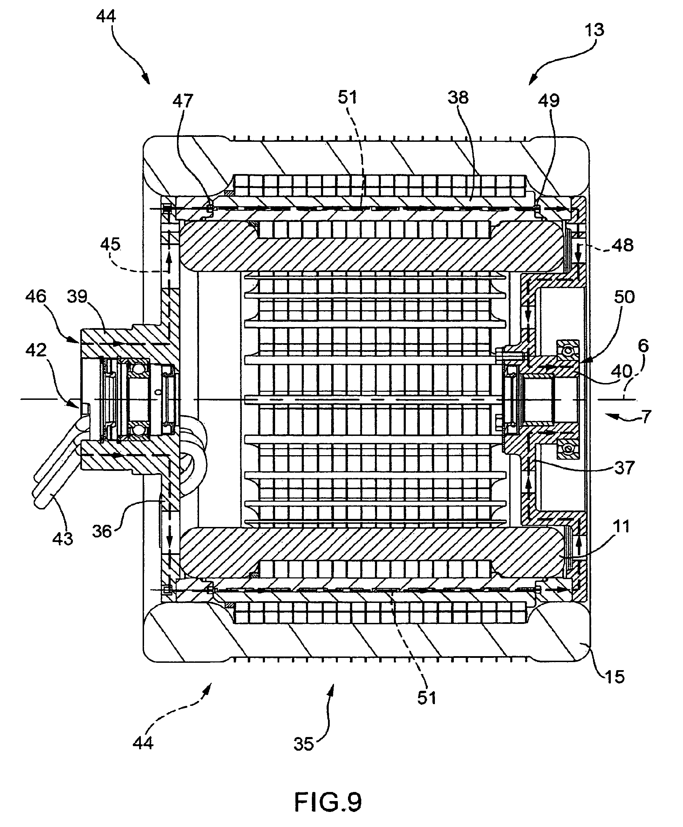

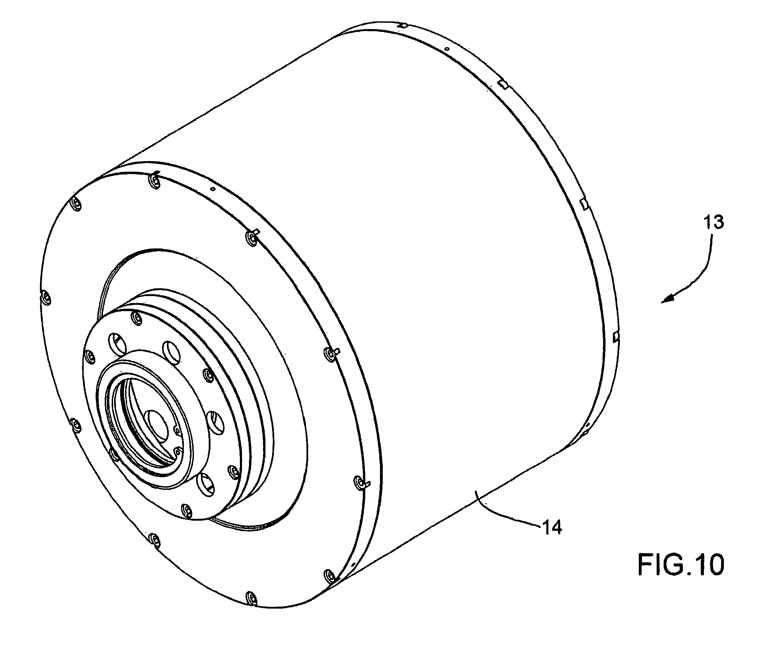

Figures 2-12 show a variant of the drive unit 3 shown in figure 1 and previously described. The main difference between the drive unit 3 shown in figure 1 and the drive unit 3 shown in figure 2 is the input shaft 5 being inserted into the shaft 12 of the internal electric machine 7, in the drive unit 3 shown in figure 1, while instead in the drive unit 3 shown in figure 2, the input shaft 5 is arranged by the side of the shaft 12 of the internal electric machine 7 on the side opposite to the braking device 25 (thus on the righthand side in figure 2).

As shown in figure 2, the input shaft 5 is made angularly integral with a flywheel 28 of the thermal internal combustion engine 2 (i.e. with a drive shaft 29 of the thermal internal combustion engine 2) by interposing a flexible coupling 30, which serves the function of introducing a certain torsional elasticity into the coupling so as to avoid resonating oscillations from being driven. By way of example, the flexible coupling 30 diagrammatically shown in figure 2 comprises an external disc 31 bolted to the flywheel 28 and centrally perforated, an internal disc 32 integral with the input shaft 5 and a spring element 33 which on one side is fixed to the external disc 31 and on the other side is fixed to the internal disc 32.

As shown in figures 3 and 4, at its cylindrical side surface, the carcass 23 has a plurality of through ventilation holes 34, which serves the function of both favoring the release of heat from the interior of the carcass 23, and lightening the carcass 23 itself.

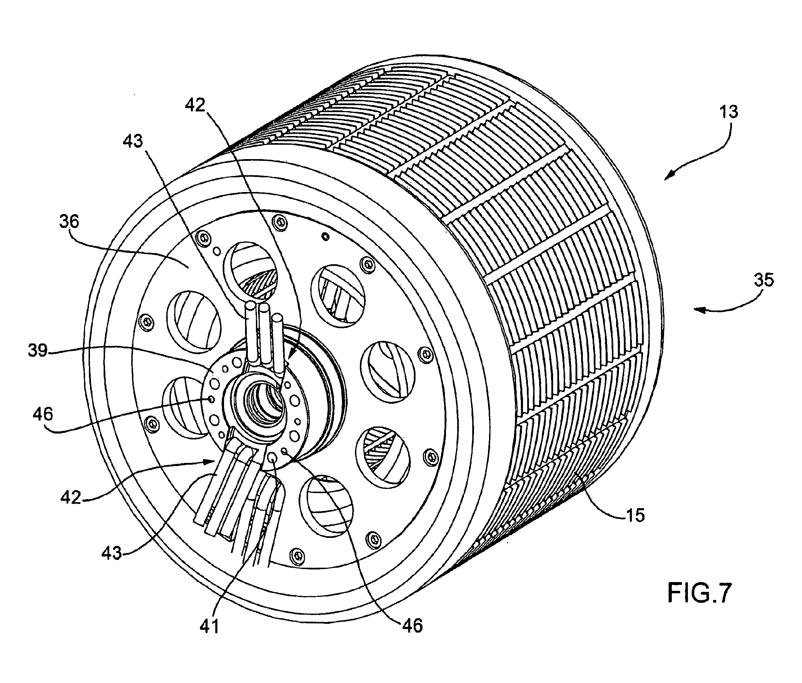

As shown in figures 7, 8 and 9, the electric machines 7 and 13 comprise a supporting body 35, which supports the stators 11 and 15, is snapped into the carcass 23 and is made integral to the carcass 23 itself by means of screws (not shown). The supporting body 35 consists of two circular base elements 36 and 37 which are fixed to the opposite sides of a cylindrical central element 38 to which the stators 11 and 15 are fixed; specifically, the stator 11 of the internal electric machine 7 is fixed inside the central element 38, while the stator 15 of the external electric machine 13 is fixed outside the central element 38 so that the two stators 11 and 15 enclose the central element 38 therebetween. The base elements 36 and 37 have respective central hubs 39 and 40, which are centrally perforated to allow the shaft 12 of the internal electric machine 7 to pass therethrough. A bearing which is arranged inside the central hub 39 itself is interposed between the shaft 12 of the internal electric machine 7 and the central hub 39 of the base element 36. A bearing which is arranged inside the central hub 40 itself is interposed between the rotor 14 of the external electric machine 13 and the central hub 40 of the base element 37.

Preferably, the base elements 36 and 37 have a plurality of through ventilation holes, which serve the function of both favoring the release of heat from the interior of the supporting body 35, and lightening the supporting body 35 itself.

The hub 39 of the base element 36 has a plurality of blind threaded holes 41, which are distributed about the rotation axis 6 and are intended to accommodate fastening screws which establish a rigid connection between the carcass 23 and the supporting body 35. Furthermore, the hub 39 of the base element 36 has two groups of introduction holes 42, which are parallel to the rotation axis 6, pass through the hub 39 and are intended to accommodate the electric wires 43 which feed the stators 11 and 15 of the electric machines 7 and 13. Specifically, each group of introduction holes 42 comprises three introduction holes 42 for allowing the introduction of three corresponding electric wires 43 which feed the three phases of the related stator 11 or 15. The introduction holes 42 of each group are arranged reciprocally side by side and the two groups of introduction holes 42 are symmetrically arranged at opposite ends of the hub 39.

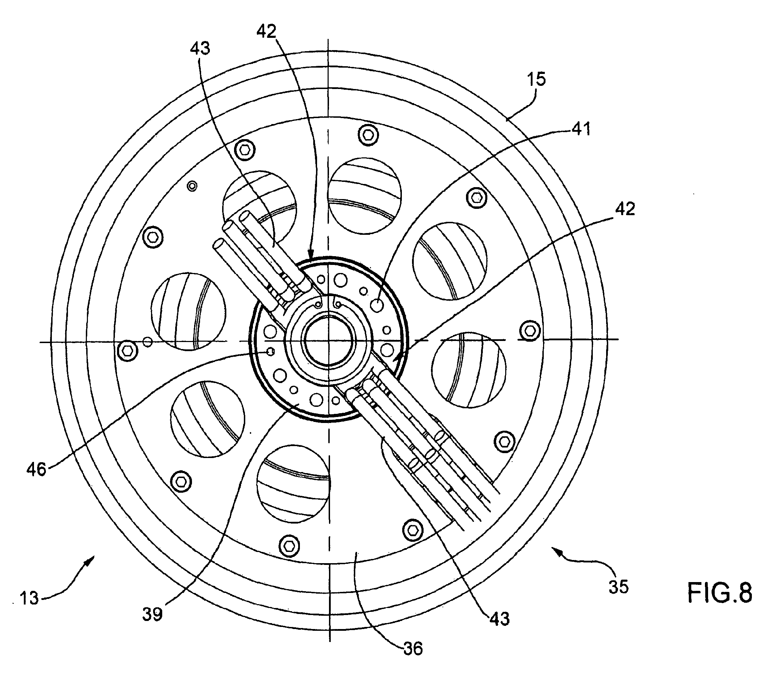

A cooling and lubrication circuit 44 is provided for circulating an oil flow through the drive unit 3. Specifically, the cooling and lubrication circuit 44 circulates an oil flow through the supporting body 35 so as to cool down the supporting body 35 itself by removing the heat generated by the stators 11 and 15 of the electric machines 7 and 13. The cooling and lubrication circuit 44 comprises feeding channels 45, each of which extends through the hub 39 and through the base element 36 from an inlet opening 46 arranged on the external surface of the hub 39 to an annular manifold 47 obtained along the periphery of the base element 36 itself. As shown in figures 7 and 8, the inlet openings of the feeding channels 45 are inserted between the threaded holes 41. Furthermore, the cooling and lubrication circuit 45 comprises extraction channels 48, each of which extends through the hub 40 and through the base element 37 from an annular manifold 49 obtained along the periphery of the base element 37 itself to an outlet opening 46 arranged on the external surface of the hub 40.

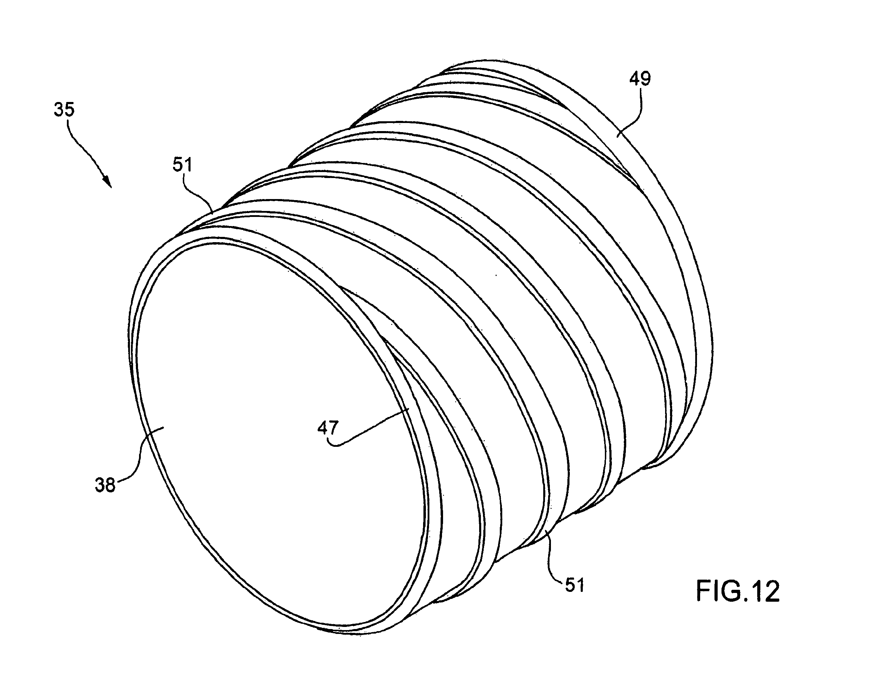

As shown in figure 12, the two annular manifolds 47 and 49 are connected to each other by a number of cooling channels 51 (e.g. four), which extend into the central element 38 and are helically wound about the rotation axis 6. The helical shape of the cooling channels 51 allows to increase the length of the cooling channels 51 so as to increase the heat exchange surface of the cooling channels 51 themselves.

In use, the cold oil flow is fed through the feeding channels 45 to the annular manifold 47, thus the cold oil is circulated through the cooling channels 51 from the annular manifold 47 to the annular manifold 49 so as to remove the heat inside the central element 38 and generated by the stators 11 and 15 of the electric machines 7 and 13; finally, the hot oil is removed from the annular manifold 49 through the extraction channels 48. In the disclosed embodiment, the oil flow from the annular manifold 47 to the annular manifold 49 through the cooling channels 51 is a one-way flow (i.e. it always occurs from the annular manifold 47 to the annular manifold 49, never vice versa); alternatively, by differently shaping the annular manifolds 47 and 49 it is possible to obtain a two-way oil flow through the cooling channels 51, i.e. a flow occurring both from the annular manifold 47 to the annular manifold 49, and from the annular manifold 49 to the annular manifold 47, so as to also obtain a back flow heat exchange.

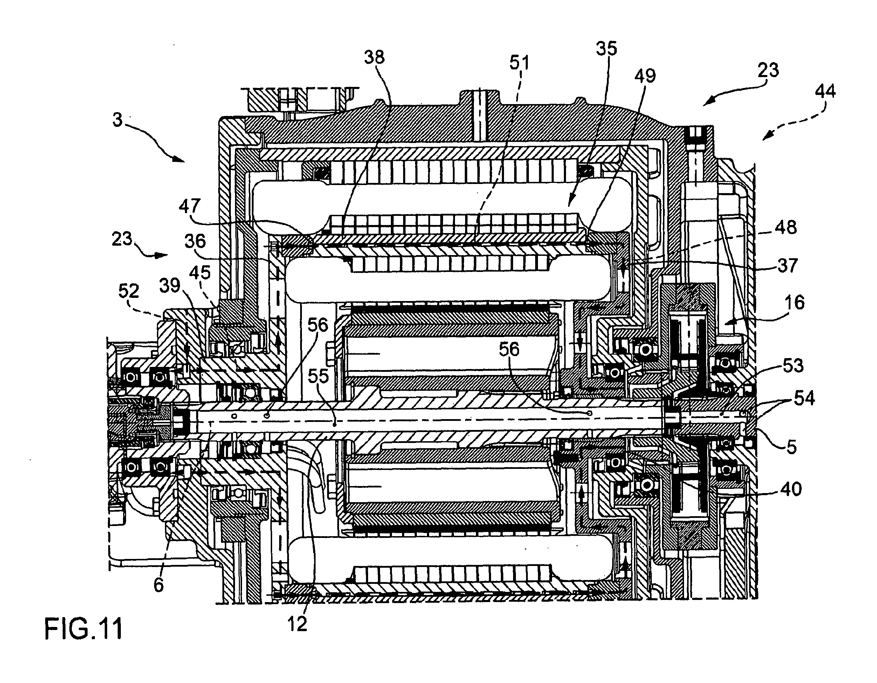

As shown in figure 11, the cooling and lubrication circuit 44 comprises an inlet channel 52, which develops inside the carcass 23 at the hub 39 of the base element 36 and puts the feeding channels 45 into communication with a cold oil delivery flow. According to a preferred embodiment, the inlet channel 52 has a secondary branch which wets the bearings interposed between the carcass 23 and the shaft 12 at the braking device 25 for lubricating the bearings themselves.

The outlet openings 50 of the extraction channels 48 are arranged at the epicyclic gear train 6 so as to feed the oil which crossed the supporting body 35 to the epicyclic gear train 16 itself in order to lubricate all the rotating parts and the corresponding bearings.

Preferably, the input shaft 5 has a longitudinally arranged, central cavity 53 which is connected to the outside by means of a number of through holes 54 radially arranged so as to collect part of the oil fed to the epicyclic gear train 16 and to convey this oil to the support bearings of the input shaft 5 and flywheel 28 to lubricate the bearings themselves.

Preferably, the shaft 12 of the rotor 10 of the internal electric machine 7 has a longitudinally arranged, central cavity 55 which is connected to the outside by means of a number of through holes 56 radially arranged so as to receive part of the oil which crossed the supporting body 35 and to convey this oil towards the support bearings of the shaft 12 for lubricating the bearings themselves.

Finally, the cooling and lubrication circuit 44 comprises an outlet channel 57 (diagrammatically shown in figure 2), which is arranged in a lower portion of the carcass 23 on the side opposite to the inlet channel 52 and conveys the oil which crossed the drive unit 3 to a collection tank of the oil (not shown).

According to a preferred embodiment shown in figure 2, the carcass 23 consists in coupling a cylindrically shaped basket 58 having an open end with a circular shaped lid 59 which is fixed to the basket 58 to close the open end. Such a configuration allows the electric machines 7 and 13 to be inserted into the carcass 23 before coupling the lid 59 to the basket 58.

According to a preferred embodiment, the internal electric machine 7 is a three-phase electric machine of the brushless type with a permanent magnet rotor; accordingly, the rotor 10 of the internal electric machine 7 comprises permanent magnets only and is free from windings. Furthermore, the external electric machine 13 is a three-phase, asynchronous machine with a squirrel-cage rotor; accordingly, the rotor 14 of the external electric machine 13 is free from windings.

The above-described traction system 1 has many advantages, because it is simple to be assembled, extremely compact (and therefore may also be mounted on small-sized vehicles), and at the same time allows a very efficient cooling of the stators 11 and 15 of the electric machines 7 and 13. Furthermore, the circulation of the oil through the drive unit 3 is optimized in virtue of the fact that the same oil is used for cooling the stators 11 and 15 of the electric machines 7 and 13 and for lubricating all the rotating parts.

## Claims

1. A hybrid traction system (1) of the thermal-electric type comprising:

    a thermal internal combustion engine (2);

an input shaft (5) which receives the motion from the thermal internal combustion engine (2) and is rotationally mounted about a rotation axis (6); a first reversible internal electric machine (7), which is provided with a first rotor (10) arranged inside and with a first stator (11) arranged outside, and is coaxially arranged about the input shaft (5); a second reversible external electric machine (13), which is provided with a second rotor (14) arranged outside and with a second stator (15) arranged inside, and is coaxially arranged about the first internal electric machine (7); an epicyclic gear train (16) provided with a sun gear (17) angularly integral with the rotor (10) of the first electric motor (7), a planet gear carrier (18) angularly integral with the input shaft (5), a number of planet gears (19) which mesh with the sun gear (17) and which are carried by the planet gear carrier (18), an external ring gear (20) which meshes with the planet gears (19) and is angularly integral with the second rotor (14) of the second electric machine (13), and a drive gear (21) which is angularly integral with the external ring gear (20) of the epicyclic gear train (16) and transmits the motion to the drive wheels; and a carcass (23) which is fixed and accommodates two electric machines (7, 13) therein, which machines comprise a supporting body (35) which supports the stators (11, 15) and is inserted within the carcass (23); the traction system (1) is **characterized in that**:

a) the supporting body (35) consists of two circular base elements (36, 37) which are fixed to opposite sides of a cylindrical central element (38) to which the stators are fixed (11, 15);
b) the base elements (36, 37) have respective central hubs (39, 40), which are centrally perforated to allow a shaft (12) of the internal electric machine (7) to pass therethrough; and
c) a first hub (39) of a first base element (36) has two groups of introduction holes (42), which are parallel to the rotation axis (6), pass through the first hub (39) and are intended to accommodate the electric wires (43) which feed the stators (11, 15) of the electric machines (7, 13).

2. A traction system (1) according to claim 1, wherein the introduction holes (42) of each group are arranged reciprocally side by side and the two groups of introduction holes (42) are symmetrically arranged at opposite ends of the first hub (39).

3. A traction system (1) according to claim 1 or 2, wherein a first hub (39) of the first base element (36) has a plurality of blind threaded holes (41), which are distributed about the rotation axis (6) and are intended to accommodate fastening screws which establish a rigid connection between the carcass (23) and the supporting body (35).

4. A traction system (1) according to claim 1, 2 or 3, wherein the stator (11) of the internal electric machine (7) is fixed inside the central element (38), while the stator (15) of the external electric machine (13) is fixed outside the central element (38) so that the two stators (11, 15) enclose the central element (38) therebetween.

5. A traction system (1) according to anyone of the claims from 1 to 4 and comprising a cooling and lubrication system (44) which circulates an oil flow through the supporting body (35) so as to cool down the supporting body (35) itself by removing the heat generated by the stators (11, 15) of the electric machines (7, 13), and circulates the same oil through the rotating parts, comprising the epicyclic gear train (16), so as to lubricate the rotating parts themselves.

6. A traction system (1) according to claim 5, wherein the cooling and lubrication circuit (44) comprises:

a first annular manifold (47) obtained along the periphery of a first base element (36);
a second annular manifold (49) obtained along the periphery of a second base element (37); and
a number of cooling channels (51), which extend into the central element (38) and connect the two annular manifolds (47, 49) to each other.

7. A traction system (1) according to claim 6, wherein the cooling channels (51) are helically wound about the rotation axis (6).

8. A traction system (1) according to claim 6 or 7, wherein the cooling and lubrication circuit (44) comprises:

feeding channels (45), each of which extends through a first hub (39) and through the first base element (36) from an inlet opening (46) arranged on the external surface of the first hub (39) to the first annular manifold (47); and
extraction channels (48), each of which extends through a second hub (40) and through the second base element (37) from the second annular manifold (49) to an outlet opening (46) arranged on the external surface of the second hub (40).

9. A traction system (1) according to claim 8, wherein the cooling and lubrication circuit (44) comprises an inlet channel (52), which develops inside the carcass (23) at the first hub (39) of the first base element (36) and puts the feeding channels (45) into communication with a cold oil delivery flow.

10. A traction system (1) according to claim 9, wherein the inlet channel (52) has a secondary branch which wets the bearings arranged between the carcass (23) and the input shaft (5) for lubricating the bearings themselves.

11. A traction system (1) according to claim 8, 9, or 10, wherein the outlet openings (50) of the extraction channels (48) are arranged at the epicyclic gear train (16) so as to feed the oil which crossed the supporting body (35) to the epicyclic gear train (16) itself in order to lubricate all the rotating parts and the corresponding bearings.

12. A traction system (1) according to anyone of the claims from 5 to 11, wherein the input shaft (5) has a longitudinally arranged, central cavity (53) which is connected to the outside by means of a number of through holes (54) radially arranged so as to collect part of the oil fed to the epicyclic gear train (16) and to convey this oil to the support bearings of the input shaft (5) to lubricate the bearings themselves.

13. A traction system (1) according to anyone of the claims from 5 to 12, wherein the shaft (12) of the rotor (10) of the internal electric machine (7) has a longitudinally arranged, central cavity (55) which is connected to the outside by means of a number of through holes (56) radially arranged so as to receive part of the oil which crossed the supporting body (35) and to convey this oil to the support bearings of the shaft (12) for lubricating the bearings themselves.

**Patentansprüche**

1. Ein wärmelektrisches Hybridzugsystem (1), aufweisend:

> eine thermische Verbrennungsmaschine (2);
> eine Eingangswelle (5), welche die Bewegung von der thermischen Verbrennungsmaschine (2) aufnimmt und drehend um eine Rotationsachse (6) montiert ist;
> eine erste reversible innere Elektromaschine (7), die mit einem innen angeordneten, ersten Rotor (10) und mit einem außen angeordneten, ersten Stator (11) versehen und koaxial um die Eingangswelle (5) angeordnet ist;
> eine zweite reversible äußere Elektromaschine (13), die mit einem außen angeordneten, zweiten Rotor (14) und mit einem innen angeordneten, zweiten Stator (15) versehen und koaxial um die erste innere Elektromaschine (7) angeordnet ist;
ein Umlaufrädergetriebe (16), versehen mit einem Sonnenrad (17), das im Winkel eine Einheit mit dem Rotor (10) der ersten Elektromaschine (7) bildet, einem Planetenradträger (18), der im Winkel eine Einheit mit der Eingangswelle (5) bildet, einer Zahl von Planetenrädern (19), die in das Sonnenrad (17) greifen und vom Planetenradträger (18) getragen werden, einem Außenzahnkranz (20), der in die Planetenräder (19) greift und im Winkel eine Einheit mit dem zweiten Rotor (14) der zweiten Elektromaschine (13) bildet, und einem Antriebsrad (21), das im Winkel eine Einheit mit dem Außenzahnkranz (20) des Umlaufrädergetriebes (16) bildet und die Bewegung auf die Antriebsräder überträgt; und
ein Gehäuse (23), das fixiert ist und zwei Elektromaschinen (7, 13) darin aufnimmt, wobei die Maschinen einen stützenden Körper (35) aufweisen, der die Statoren (11, 15) stützt und in das Gehäuse (23) gesteckt ist;
das Zugsystem (1) ist **dadurch gekennzeichnet, dass:**

> der stützende Körper (35) aus zwei kreisförmigen Basiselementen (36, 37) besteht, die an gegenüberliegenden Seiten eines zylindrischen mittigen Elements (38) fixiert sind, an denen die Statoren (11, 15) fixiert sind;
> die Basiselemente (36, 37) entsprechende mittige Naben (39, 40) haben, die mittig durchbohrt sind, damit eine Welle (12) der inneren Elektromaschine (7) hindurchgeführt werden kann; und
> eine erste Nabe (39) eines ersten Basiselements (36) zwei Gruppen von Einführungslöchern (42) besitzt, die parallel zur Rotationsachse (6) sind, durch die erste Nabe (39) verlaufen und dazu bestimmt sind, die elektrischen Drähte (43) aufzunehmen, welche die Statoren (11, 15) der Elektromaschinen (7, 13) speisen.

2. Zugsystem (1) gemäß Anspruch 1, bei dem die Einführungslöcher (42) jeder Gruppe wechselseitig Seite an Seite angeordnet sind und die zwei Gruppen der Einführungslöcher (42) symmetrisch an gegenüberliegenden Enden der ersten Nabe (39) angeordnet sind.

3. Zugsystem (1) gemäß Anspruch 1 oder 2, bei dem eine erste Nabe (39) des ersten Basiselements (36) eine Vielzahl von Gewindesacklöchern (41) besitzt, die um die Rotationsachse (6) herum verteilt und dazu bestimmt sind, Befestigungsschrauben aufzunehmen, die eine starre Verbindung zwischen dem Gehäuse (23) und dem stützenden Körper (35) herstellen.

4. Zugsystem (1) gemäß Anspruch 1, 2 oder 3, bei dem der Stator (11) der inneren Elektromaschine (7) innerhalb des mittigen Elements (38) fixiert ist, während der Stator (15) der äußeren Elektromaschine (13) außerhalb des mittigen Elements (38) so fixiert ist, dass die zwei Statoren (11, 15) das mittige Element (38) dazwischen einschließen.

5. Zugsystem (1) gemäß irgendeinem der Ansprüche von 1 bis 4, ein Kühl- und Schmiersystem (44) aufweisend, das einen Ölstrom durch den stützenden Körper (35) im Kreislauf führt, um den stützenden Körper (35) abzukühlen, indem es die von den Statoren (11, 15) der Elektromaschinen (7, 13) erzeugte Wärme ableitet und dasselbe Öl durch die drehenden Teile, darunter das Umlaufrädergetriebe (16), im Kreislauf führt, um die drehenden Teile selbst zu schmieren.

6. Zugsystem (1) gemäß Anspruch 5, bei dem der Kühl- und Schmierkreis (44) aufweist:

   ein erstes ringförmiges Sammelrohr (47), das entlang der Peripherie eines ersten Basiselements (36) gebildet wird;
   ein zweites ringförmiges Sammelrohr (49), das entlang der Peripherie eines zweiten Basiselements (37) gebildet wird; und
   eine Zahl von Kühlkanälen (51), die sich in das mittige Element (38) erstrecken und die zwei ringförmigen Sammelrohre (47, 49) miteinander verbinden.

7. Zugsystem (1) gemäß Anspruch 6, bei dem die Kühlkanäle (51) helixförmig um die Rotationsachse (6) gewunden sind.

8. Zugsystem (1) gemäß Anspruch 6 oder 7, bei dem der Kühl- und Schmierkreis (44) aufweist:

   Speisekanäle (45), die sich aus einer Einlassöffnung (46), die auf der Außenfläche der ersten Nabe (39) angeordnet ist, jeweils durch eine erste Nabe (39) und durch das erste Basiselement (36) zum ersten ringförmigen Sammelrohr (47) erstrecken; und
   Abzugskanäle (48), die sich aus dem zweiten ringförmigen Sammelrohr (49) jeweils durch eine zweite Nabe (40) und durch das zweite Basiselement (37) zu einer Auslassöffnung (46), die auf der Außenfläche der zweiten Nabe (40) angeordnet ist, erstrekken.

9. Zugsystem (1) gemäß Anspruch 8, bei dem der Kühl- und Schmierkreis (44) einen Einlasskanal (52) aufweist, der im Inneren des Gehäuses (23) an der ersten Nabe (39) des ersten Basiselements (36) gebildet wird und die Speisekanäle (45) mit einem Kaltölförderstrom in Verbindung bringt.

10. Zugsystem (1) gemäß Anspruch 9, bei dem der Einlasskanal (52) einen sekundären Ast besitzt, der die zwischen dem Gehäuse (23) und der Eingangswelle (5) angeordneten Lager zum Schmieren der Lager benetzt.

11. Zugsystem (1) gemäß Anspruch 8, 9 oder 10, bei dem die Auslassöffnungen (50) der Abzugskanäle (48) so am Umlaufrädergetriebe (16) angeordnet sind, dass sie das Öl, das den stützenden Körper (35) durchquert hat, dem Umlaufrädergetriebe (16) selbst zuführen, um alle drehenden Teile und die entsprechenden Lager zu schmieren.

12. Zugsystem (1) gemäß irgendeinem der Ansprüche von 5 bis 11, bei dem die Eingangswelle (5) einen in Längsrichtung angeordneten, mittigen Hohlraum (53) hat, der mittels einer Zahl von radial angeordneten Durchgangslöchern (54) mit der Außenseite verbunden ist, um einen Teil des dem Umlaufrädergetriebe (16) zugeführten Öls zu sammeln und dieses Öl zu den Stützlagern der Eingangswelle (5) zu fördern, um die Lager selbst zu schmieren.

13. Zugsystem (1) gemäß irgendeinem der Ansprüche von 5 bis 12, bei dem die Welle (12) des Rotors (10) der inneren Elektromaschine (7) einen in Längsrichtung angeordneten, mittigen Hohlraum (55) hat, der mittels einer Zahl von radial angeordneten Durchgangslöchern (56) mit der Außenseite verbunden ist, um einen Teil Öls, das den stützenden Körper (35) durchquert hat, aufzunehmen und dieses Öl zu den Stützlagern der Welle (12) zu fördern, um die Lager selbst zu schmieren.

**Revendications**

1. Système de traction hybride (1) de type thermoélectrique comprenant :

   un moteur thermique à combustion interne (2) ;
   un arbre d'entrée (5) qui reçoit le mouvement du moteur thermique à combustion interne (2) et est monté à rotation autour d'un axe de rotation (6) ;
   une première machine électrique interne réversible (7), qui est pourvue d'un premier rotor (10) disposé à l'intérieur et d'un premier stator (11) disposé à l'extérieur, et est disposée coaxialement autour de l'arbre d'entrée (5) ;

une seconde machine électrique externe réversible (13), qui est pourvue d'un second rotor (14) disposé à l'extérieur et d'un second stator (15) disposé à l'intérieur, et est disposée coaxialement autour de la première machine électrique interne (7) ;

un train épicycloïdal (16) doté d'une roue solaire (17) angulairement solidaire du rotor (10) du premier moteur électrique (7), un porte-satellites (18) angulairement solidaire de l'arbre d'entrée (5), une pluralité d'engrenages planétaires (19) qui engrènent avec la roue solaire (17) et sont portés par le porte-satellites (18), une couronne externe (20) qui engrène avec les engrenages planétaires (19) et est angulairement solidaire du second rotor (14) de la seconde machine électrique (13), et un pignon d'entraînement (21) qui est angulairement solidaire de la couronne externe (20) du train épicycloïdal (16) et transmet le mouvement aux roues motrices ; et

une carcasse (23) qui est fixe et reçoit deux machines électriques (7, 13), lesquelles machines comprennent un corps de support (35) qui supporte les stators (11, 15) et est inséré à l'intérieur de la carcasse (23) ;

le système de traction (1) est **caractérisé en ce que** :

a) le corps de support (35) comprend deux éléments de base circulaires (36, 37) fixés sur deux côtés opposés d'un élément central cylindrique (38) auquel sont fixés les stators (11, 15) ;

b) les éléments de base (36, 37) présentent des moyeux centraux (39, 40) respectifs qui sont perforés en leur centre pour pouvoir être traversés par un arbre (12) de la machine électrique interne (7) ; et

c) un premier moyeu (39) d'un premier élément de base (36) présente deux groupes d'orifices d'introduction (42) qui sont parallèles à l'axe de rotation (6), passent à travers le premier moyeu (39) et sont destinés à recevoir les câbles électriques (43) alimentant les stators (11, 15) des machines électriques (7, 13).

**2.** Système de traction (1) selon la revendication 1, dans lequel les orifices d'introduction (42) de chaque groupe sont disposés réciproquement côte à côte et les deux groupes d'orifices d'introduction (42) sont disposés symétriquement à des extrémités opposées du premier moyeu (39).

**3.** Système de traction (1) selon la revendication 1 ou 2, dans lequel un premier moyeu (39) du premier élément de base (36) présente une pluralité de trous filetés borgnes (41) répartis autour de l'axe de rotation (6) et destinés à recevoir des vis de fixation qui établissent une liaison rigide entre la carcasse (23) et le corps de support (35).

**4.** Système de traction (1) selon la revendication 1, 2 ou 3, dans lequel le stator (11) de la machine électrique interne (7) est fixé à l'intérieur de l'élément central (38), tandis que le stator (15) de la machine électrique externe (13) est fixé à l'extérieur de l'élément central (38) de telle sorte que les deux stators (11, 15) enferment entre eux l'élément central (38).

**5.** Système de traction (1) selon l'une quelconque des revendications 1 à 4, comprenant un système de refroidissement et de lubrification (44) qui fait circuler un débit d'huile à travers le corps de support (35) de façon à refroidir le corps de support (35) lui-même par élimination de la chaleur générée par les stators (11, 15) des machines électriques (7, 13), et fait circuler la même huile à travers les pièces tournantes, comprenant le train épicycloïdal (16), de façon à lubrifier les pièces tournantes elles-mêmes.

**6.** Système de traction (1) selon la revendication 5, dans lequel le circuit de refroidissement et de lubrification (44) comprend :

un premier collecteur annulaire (47) réalisé le long de la périphérie du premier élément de base (36) ;

un second collecteur annulaire (49) réalisé le long de la périphérie d'un second élément de base (37) ; et

une pluralité de canaux de refroidissement (51) qui s'étendent dans l'élément central (38) et relient les deux collecteurs annulaires (47, 49) entre eux.

**7.** Système de traction (1) selon la revendication 6, dans lequel les canaux de refroidissement (51) sont enroulés en hélice autour de l'axe de rotation (6).

**8.** Système de traction (1) selon la revendication 6 ou 7, dans lequel le circuit de refroidissement et de lubrification (44) comprend :

des canaux d'alimentation (45), s'étendant chacun au travers d'un premier moyeu (39) et au travers du premier élément de base (36) depuis une ouverture d'admission (46) disposée sur la surface externe du premier moyeu (39) jusqu'au premier collecteur annulaire (47) ; et

des canaux d'extraction (48), s'étendant chacun au travers d'un second moyeu (40) et au travers du second élément de base (37) depuis le second collecteur annulaire (49) jusqu'à une ouverture de sortie (46) disposée sur la surface externe du second moyeu (40).

**9.** Système de traction (1) selon la revendication 8, dans lequel le circuit de refroidissement et de lubrification (44) comprend un canal d'admission (52) qui s'étend à l'intérieur de la carcasse (23) au niveau du premier moyeu (39) du premier élément de base (36) et met les canaux d'alimentation (45) en communication avec un débit de distribution d'huile froide.

**10.** Système de traction (1) selon la revendication 9, dans lequel le canal d'admission (52) comporte une dérivation secondaire qui humidifie les paliers disposés entre la carcasse (23) et l'arbre d'entrée (5) pour lubrifier les paliers eux-mêmes.

**11.** Système de traction (1) selon la revendication 8, 9 ou 10, dans lequel les ouvertures de sortie (50) des canaux d'extraction (48) sont disposés au niveau du train épicycloïdal (16) de manière à alimenter l'huile ayant traversé le corps de support (35) au train épicycloïdal (16) lui-même afin de lubrifier toutes les pièces tournantes et les paliers correspondants.

**12.** Système de traction (1) selon l'une quelconque des revendications 5 à 11, dans lequel l'arbre d'entrée (5) présente une cavité centrale (53) disposée longitudinalement, qui est reliée à l'extérieur au moyen d'une pluralité de trous traversants (54) disposés radialement de façon à collecter une partie de l'huile alimentée au train épicycloïdal (16) et à transporter cette huile aux paliers support de l'arbre d'entrée (5) pour lubrifier les paliers eux-mêmes.

**13.** Système de traction (1) selon l'une quelconque des revendications 5 à 12, dans lequel l'arbre (12) du rotor (10) de la machine électrique interne (7) présente une cavité centrale (55) disposée longitudinalement, qui est reliée à l'extérieur au moyen d'une pluralité de trous traversants (54) disposés radialement de façon à recevoir une partie de l'huile ayant traversé le corps de support (35) et à transporter cette huile jusqu'aux paliers support de l'arbre (12) pour lubrifier les paliers eux-mêmes.

FIG.1

FIG.2

FIG.3

EP 2 168 802 B1

FIG.4

FIG.5

EP 2 168 802 B1

FIG.6

EP 2 168 802 B1

FIG.7

EP 2 168 802 B1

FIG.8

FIG.9

FIG.10

FIG.11

FIG.12

**EP 2 168 802 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007017719 A2

- WO 20070177192 A2